# EUROPEAN PATENT APPLICATION

(11) **EP 4 815 079 A1**
(43) Date of publication of application: **30.09.2026**
(21) Application number: 24933889.8
(22) Date of filing: 27.12.2024
(51) Int. Cl.: H01M 10/04, H01M 10/44

(54) **DIRECT-CURRENT BUS-BASED SERIES FORMATION AND CAPACITY GRADING PRODUCTION TESTING SYSTEM**

(30) Priority: 02.04.2024 CN 202410391339
(71) Applicant: Guangzhou Kinte Industrial Co., Ltd., Guangzhou, Guangdong 510000 (CN); China National Electric Apparatus Research Institute Co., Ltd., Guangzhou, Guangdong 510000 (CN)
(72) Inventor: ZHANG, Xingwang, Guangzhou, Guangdong 510000 (CN); SUN, Junguang, Guangzhou, Guangdong 510000 (CN); QIN, Mao, Guangzhou, Guangdong 510000 (CN); YI, Li, Guangzhou, Guangdong 510000 (CN); XIE, Jianwei, Guangzhou, Guangdong 510000 (CN); WANG, Han, Guangzhou, Guangdong 510000 (CN); YANG, Kangjia, Guangzhou, Guangdong 510000 (CN); LAI, Qiancheng, Guangzhou, Guangdong 510000 (CN); XU, Xiaofang, Guangzhou, Guangdong 510000 (CN)
(74) Representative: Sebastian, Jens
(86) International application number: PCT/CN2024/143233
(87) International publication number: WO 2025/208965

(57) **Abstract**

A common bus-based series-connected formation and capacity-grading production testing system are disclosed, comprising: an AC grid, a PCS device, a common DC bus, a capacity-grading section DC bus, a formation section DC bus, a formation master control cabinet, a capacity-grading master control cabinet, a series-connected capacity-grading device on a capacity-grading line, and a series-connected formation device on a formation line, wherein the PCS device is connected to both the AC grid and the common DC bus, and the common DC bus is connected to both the formation master control cabinet and the capacity-grading master control cabinet, the series-connected capacity-grading device on the capacity-grading line is connected to both the capacity-grading master control cabinet and the capacity-grading section DC bus, and the series-connected formation device on the formation line is connected to both the formation master control cabinet and the formation section DC bus. The present invention employs a single PCS system for the entire production line, with each independent device directly connected to the common DC bus. During operation, the energy fed back by batteries undergoing formation and capacity-grading is prioritized for use by other formation and capacity-grading devices on the common bus. This reduces the number of energy conversion cycles during charging and discharging cycles, improves energy efficiency, and reduces energy loss.

## Description

### Technical field

The present invention relates to the field of battery formation and capacity-grading technology, specifically to a DC bus-based series-connected formation and capacity-grading production testing system.

### Background

Formation and capacity-grading processes are core processes in the later-stage production of lithium-ion batteries. These processes involve multiple charging and discharging cycles, which consume a significant amount of electrical energy. Series-connected formation and capacity-grading technology is a new testing technique that has emerged in recent years. By connecting dozens or even hundreds of batteries in series for charging and discharging, this method offers high charging and discharging efficiency and good current consistency.

The bidirectional energy conversion section of the series-connected formation and capacity-grading technology primarily consists of a bidirectional AC-DC module and a bidirectional DC-DC module. Here, the AC-DC module is used to rectify and invert 380V AC power into DC (typically configurable between 600V and 800V), while the DC-DC module implements high-precision constant-current control to charge and discharge the series-connected batteries. In practical applications, production lines contain numerous formation and capacity-grading devices. At any given moment, some devices charge the series-connected battery assembly undergoing formation and capacity-grading, while others discharge them. All these devices are connected via 380V cables within the plant, which serve as a central point for energy conversion (AC bus). When the formation or capacity-grading device is charging, energy is drawn from the 380V AC bus, passes through the AC-DC and DC-DC within the device, and then is used to charge or discharge the series battery assembly; during the discharging, the battery assembly's energy passes through the DC-DC and then inverted via the AC-DC and fed back to the 380V AC bus.

The applicant's research found that in the formation and capacity-grading production testing systems on existing production lines, all battery charging and discharging paths include both AC-DC and DC-DC converters, resulting in an increased number of conversion cycles of energy fed back during the battery discharging on the production line and a reduction in system efficiency. Additionally, in existing series-connected formation and capacity-grading technology, when charging and discharging currents are low, issues such as low total power per device and low overall conversion efficiency of the devices arise.

### Summary

To overcome the aforementioned technical shortcomings and further improve the system energy efficiency of existing lithium battery formation and capacity-grading production lines, the present invention provides a DC bus-based series-connected formation and capacity-grading production testing system. To solve the above problems, the present invention is implemented according to the following technical solution:
In the first aspect,, the present invention provides a DC bus-based series-connected formation and capacity-grading production testing system, comprising: an AC grid, a PCS device, a common DC bus, a capacity-grading section DC bus, a formation section DC bus, a formation master control cabinet, a capacity-grading master control cabinet, a series-connected capacity-grading device on a capacity-grading line, and a series-connected formation device on a formation line, wherein the PCS device is connected to the AC grid and to the common DC bus respectively, the common DC bus is connected to the formation master control cabinet and to the capacity-grading master control cabinet respectively, the series-connected capacity-grading device on the capacity-grading line is connected to the capacity-grading master control cabinet and to the capacity-grading section DC bus respectively, and the series-connected formation device on the formation line is connected to the formation master control cabinet and to the formation section DC bus respectively, wherein the PCS device is a bidirectional power conversion unit used to rectify three-phase AC power into DC or to invert DC power into three-phase AC power,
the formation master control cabinet is used to control the connection between the formation section DC bus and the common DC bus,
the capacity-grading master control cabinet is used to control the connection between the capacity-grading section DC bus and the common DC bus,
the series-connected capacity-grading device on the capacity-grading line is a device used for lithium battery capacity-grading on a production line, and the series-connected formation device on the formation line is a device used for lithium battery formation on the production line, and
both the series-connected capacity-grading device and the series-connected formation device are a complete set of automated, intelligent production testing devices comprising bidirectional power conversion circuits, pin beds, and control systems that are used for the formation and capacity-grading of series-connected lithium batteries.

Preferably, the PCS device is a bidirectional power conversion unit, comprising a single PCS unit or multiple PCS units operating in parallel. A PCS unit comprises a three-phase power-frequency transformer, a bidirectional AC-DC converter, a DC switch, and control and indication components. A primary side of the three-phase power-frequency transformer is connected to the AC grid, and a secondary side thereof is connected to the bidirectional AC-DC converter, serving to isolate and step up or down the voltage. The primary side voltage range is 200 V to 35,000 V, and the secondary side voltage range is 200 V to 1,000 V. The bidirectional AC-DC converter is of non-isolated type and is connected to the DC switch, which in turn is connected to a common DC bus.

Preferably, the PCS device is a bidirectional power conversion unit comprising a single PCS unit or multiple PCS units operating in parallel. The PCS unit comprises one or more bidirectional AC-DC converter modules, a DC switch, and control and indication components. The bidirectional AC-DC converter modules are of high-frequency isolated type with multiple parallel outputs. The parallel input terminals of the bidirectional AC-DC converter module are connected to the AC grid, and the parallel output terminals thereof are connected to the DC switch which is connected to a common DC bus.

Preferably, the PCS device is a bidirectional power conversion unit comprising a single PCS unit or multiple PCS units operating in parallel. The PCS unit includes a power-frequency transformer, multiple bidirectional AC-DC converter modules, a DC switch, and control and indication components, with the multiple bidirectional AC-DC converter modules operating in parallel. A primary side of the power-frequency transformer is connected to the AC grid, and the secondary side thereof is connected to the parallel input terminals of the bidirectional AC-DC converter module, serving to isolate and step up or down the voltage. The primary side voltage range is 200 V to 35,000 V, and the secondary side voltage range is 200 V to 1,000 V. The bidirectional AC-DC converter module is of high-frequency isolated type; the parallel output terminals of the bidirectional AC-DC converter module are connected to the DC switch which is connected to the common DC bus.

Preferably, the capacity-grading master control cabinet comprises a DC switch, a switch monitoring module, and a switch status display unit. The DC switch is used to control the connection between the common DC bus and the capacity-grading DC bus. The capacity-grading master control cabinet uses the DC switch to control the connection between the capacity-grading section DC bus and the common DC bus. The capacity-grading master control cabinet serves to control and indicate the power supply to the capacity-grading section DC bus and the series-connected capacity-grading device.

The formation master control cabinet comprises a DC switch, a switch monitoring module, and a switch status display unit. The DC switch is used to control the connection between the common DC bus and the formation DC bus. The formation master control cabinet uses the DC switch to control the connection between the formation section DC bus and the common DC bus. The formation master control cabinet serves to control and indicate the power supply to the formation section DC bus and the series-connected formation device.

Preferably, when the DC switch in either the formation master control cabinet or the capacity-grading master control cabinet is turned on, the common DC bus is connected to the formation section DC bus or to the capacity-sharing section DC bus, allowing the series-connected formation device or the series-connected capacity-grading device to operate.

When the DC switches of both the formation master control cabinet and the capacity-grading master control cabinet are turned on, the common DC bus is connected to both the capacity-grading section DC bus and the formation section DC bus, allowing the series-connected formation device and the series-connected capacity-grading device to operate.

Preferably, the bidirectional power conversion circuit in the series-connected capacity-grading device is connected to the capacity-grading section DC bus and to the series-controlled battery section and performs the capacity-grading process on the series-connected batteries, which includes multiple charging and discharging cycles;
the bidirectional power conversion circuit in the series-connected formation device is connected to the formation section DC bus and to the series-controlled battery section and performs the formation process on the series-connected batteries, which includes multiple charging cycles.

Preferably, the series-connected batteries comprise N cells undergoing formation and capacity-grading, with the N cells connected in series via internal control within the formation and capacity-grading devices; N is an integer greater than or equal to 8 and less than or equal to 256; the cells within the series-connected batteries refer to those requiring charging and discharging during the formation and capacity-grading processes.

Preferably, when the series-connected capacity-grading device and the series-connected formation device on the formation and capacity-grading production line perform capacity-grading and formation respectively, the devices perform charging and discharging operations. The device performing discharge operations feeds energy back to the common DC bus, i.e., energy fed back to the DC bus, while the charging device obtains energy from the common DC bus, i.e., energy consumed by the DC bus. The electrical energy flowing through the PCS device in the system is the difference in energy between the energy fed back to the DC bus and the energy consumed by the DC bus. The PCS operating state, which includes a rectification state, an inversion state, an idle state, and a no-load state, is automatically adjusted based on this difference in energy.

Preferably, when the energy consumed on the common DC bus exceeds the energy fed back, the difference in energy is drawn from the AC grid via the PCS device through the common DC bus, and the PCS operating state is the rectification state,
when the power consumed on the common DC bus is less than the power fed back, the difference in energy is fed back to the AC grid via the common DC bus through the PCS device, and the PCS operating state is the inversion state,
when the energy consumed on the common DC bus equals the energy fed back, no energy flows between the common DC bus and the PCS device, and the PCS operating is the idle state,
when none of the series-connected formation devices or the series-connected capacity-grading devices on the common DC bus are performing charging or discharging operations, the PCS operating state is the no-load state.

Compared to existing technologies, the beneficial effects of the present invention are as follows: the present invention separates the AC-DC section (380V to 700V) of the dual-power conversion unit in conventional battery formation and capacity-grading devices, and the entire production line uses a single PCS. The AC grid connected to the new PCS system can range from a 380V low-voltage grid to a 35kV high-voltage grid. The new series-connected formation and capacity-grading device is connected to a common DC bus (voltage approximately 200-1500V, configurable). Consequently, the production line architecture shifts from an AC bus to a common DC bus. Building upon the high charging and discharging efficiency of the original series-connected devices, the overall charging and discharging of the formation and capacity-grading production line eliminates the need for energy fed back to travel through the AC-DC-AC bus-AC-DC conversion path, thereby reducing energy conversion and significantly improving the efficiency of the charging and discharging cycle; the PCS on the common DC bus operates at an optimal load level, achieving high charging and discharging efficiency and improving the energy quality of the AC grid within the plant.

### Description of the Drawings

The specific embodiments of the present invention are described in detail below with reference to the accompanying drawings, wherein:
FIG. 1 is an illustrative diagram of the structure of a DC bus-based series-connected formation and capacity-grading production testing system according to an embodiment of the present invention,
FIG. 2 is a diagram of the series topology of a common DC bus and a series-connected formation and capacity-grading device in an embodiment of the present invention,
FIG. 3 is a schematic diagram illustrating the battery charge-to-discharge energy path for a DC bus-based series-connected formation and capacity-grading production testing system according to an embodiment of the present invention, compared to a conventional series-connected formation and capacity-grading production testing system,
FIG. 4 is an illustrative diagram of the principle of energy conversion in a DC bus-based series-connected formation and capacity-grading production testing system according to an embodiment of the present invention,
FIG. 5 is an illustrative diagram of a first configuration of a PCS device according to an embodiment of the present invention,
FIG. 6 is an illustrative diagram of a second configuration of a PCS device according to an embodiment of the present invention;
FIG. 7 is an illustrative diagram of a third configuration of a PCS device according to an embodiment of the present invention;
FIG. 8 is an illustrative diagram of the principle of energy conversion in a system in a first rectification state according to an embodiment of the present invention;
FIG. 9 is an illustrative diagram of the principle of energy conversion in a system in a second rectification state according to an embodiment of the present invention;
FIG. 10 is a schematic diagram illustrating the principle of energy conversion in a system in a inversion state according to an embodiment of the present invention;
FIG. 11 is an illustrative diagram of the principle of energy conversion in a system in an idle state according to an embodiment of the present invention,
FIG. 12 is an illustrative diagram of the structure of another DC bus-based series-connected formation and capacity-grading production testing system according to an embodiment of the present invention,
FIG. 13 is an illustrative diagram of the structure of a DC bus-based series-connected formation production testing system according to an embodiment of the present invention,
FIG. 14 is an illustrative diagram of the structure of a DC bus-based series-connected capacity-grading production testing system according to an embodiment of the present invention,
FIG. 15 is an illustrative diagram of the structure of another DC bus-based series-connected capacity-grading production testing system according to an embodiment of the present invention.

### Detailed Description of the Embodiments

The preferred embodiments of the present invention will be described below with reference to the accompanying drawings. It should be understood that the preferred embodiments described herein are provided for illustrative and explanatory purposes only and are not intended to limit the scope of the present invention.

With the advancement of technology, electronic products and new-energy vehicles have become widely used in people's daily lives. In recent years, new energy vehicles and new electrochemical energy storage technologies have developed rapidly, leading to a rapid increase in demand for power batteries and energy storage batteries.

Formation and capacity-grading processes are core processes in the back-end production of lithium batteries. These processes involve multiple charge-discharge cycles, consuming a significant amount of electrical energy. Formation is used to activate the batteries, while capacity-grading is used to classify and categorize them. Series-connected formation and capacity-grading technology is a new technique developed in recent years, which involves connecting dozens or hundreds of batteries in series for charging and discharging. It features high charging and discharging efficiency and good current consistency.

The energy conversion section of the series-connected formation and capacity-grading technology primarily consists of bidirectional AC-DC and bidirectional DC-DC converters. The bidirectional AC-DC converter is used to rectify 380V AC to DC (typically configurable between 600V and 800V) or to invert DC back to 380V AC. The bidirectional DC-DC converter enables high-precision constant-current control for charging or discharging the series-connected batteries. During charging, the required electrical energy is drawn from the 380V grid via the AC-DC and DC-DC converters, and during discharging, the battery's electrical energy is fed back to the 380V grid via the AC-DC and DC-DC converters for use by other electrical devices.

Compared to the parallel-connected (5V) formation and capacity-grading technology, the series-connected formation and capacity-grading technology offers advantages such as higher charging and discharging efficiency.

In practical applications, automated lithium battery production lines involve numerous devices for the formation and capacity-grading processes. At any given time, some of these formation and capacity-grading devices are charging batteries (referred to as charging devices), some formation or capacity-grading devices are discharging batteries (referred to as discharging devices), while other portion of devices are in a dormant (or idle) state or performing feeding operations, meaning they are not currently charging or discharging (this portion does not affect the energy analysis and will be omitted in the following discussion).

These charging and discharging devices are all connected via 380V cables within the plant, and a central point for energy conversion is the 380V AC bus. It can be assumed that conventional formation and capacity-grading devices share the same AC bus. All devices charging or discharging batteries must pass through a bidirectional conversion section consisting of a bidirectional AC-DC converter and a downstream bidirectional DC-DC converter. In this system, the battery discharge energy path is: discharging device 1 (battery assembly 1 - DC-DC - AC-DC) - 380V bus - charging device 2 (AC-DC - DC-DC - battery assembly 2). The process of discharging from one battery assembly to charging another involves two instances of DC-DC conversion losses and two instances of AC-DC conversion losses.

To further reduce energy consumption during the formation and capacity-grading processes, and to improve the charging and discharging efficiency of the formation and capacity-grading production line on the basis of the high charging and discharging efficiency of the existing series-connected formation and capacity-grading system, the invention has developed a DC bus-based series-connected formation and capacity-grading production testing system.

All devices operate via an AC-DC converter, followed by a DC-DC converter for charging and discharging the series-connected battery assembly. The most critical component of lithium battery formation and capacity-grading device is the DC-DC converter's high-precision constant-current and constant-voltage control, which is indispensable. By separating the AC-DC section from conventional formation and capacity-grading devices and replacing them with a single high-power AC-DC unit-the common PCS-the AC-DC functions are achieved, forming a system with the new common-bus formation and capacity-grading devices. In this new system, the energy path for battery discharge is: discharging device 1 (battery assembly 1-DC-DC) - DC bus -- charging device 2 (DC-DC - battery assembly 2). The difference in energy is routed through the PCS, thereby reducing AC-DC conversion losses by two instances between battery assembly during discharging and charging. This approach improves the system energy conversion efficiency of both the formation and capacity-grading production lines while reducing the amount of bus cabling required. With this system architecture, the PCS can operate at an optimal power level, which enhances the system stability and improves the power quality of the AC grid.

This solution further enhances the system efficiency of the existing formation and capacity-grading devices. It is applicable not only to the series-connected formation and capacity-grading systems, but also to the parallel-connected formation and capacity-grading systems.

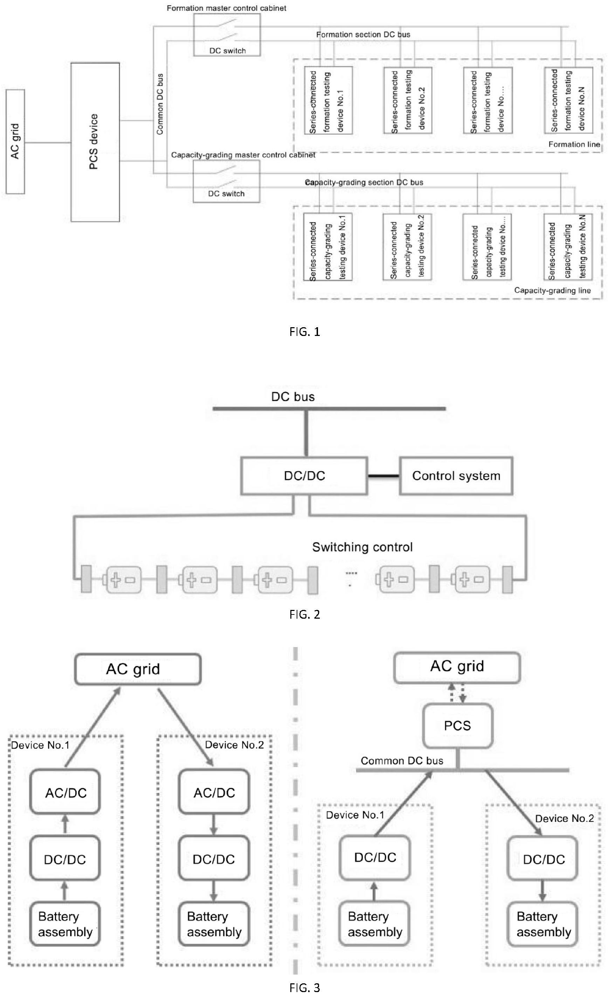

As shown in FIG. 1, a DC bus-based series-connected formation and capacity-grading production testing system comprises: a AC grid, a PCS device, a common DC bus, a capacity-grading section DC bus, a formation section DC bus, a formation master control cabinet, a capacity-grading master control cabinet, a series-connected capacity-grading device on a capacity-grading line, and a series-connected formation device on a formation line, wherein the PCS device is connected to the AC grid and to the common DC bus respectively, the common DC bus is connected to the formation master control cabinet and to the capacity-grading master control cabinet respectively, the series-connected capacity-grading device on the capacity-grading line is connected to the capacity-grading master control cabinet and to the capacity-grading section DC bus respectively, the series-connected formation device on the formation line is connected to the formation master control cabinet and to the formation section DC bus respectively, wherein the PCS device is a bidirectional power conversion unit, used to rectify three-phase AC power into DC power or to invert DC power into three-phase AC power, and wherein
the formation master control cabinet is used to control the connection between the formation section DC bus and the common DC bus;
the capacity-grading master control cabinet is used to control the connection between the capacity-grading section DC bus and the common DC bus;
the series-connected capacity-grading device on the capacity-grading line is a device used for lithium battery capacity- grading on a production line, while the series-connected formation device on a formation line is a device used for lithium battery formation on the production line;
both the series-connected capacity-grading device and the series-connected formation device are a complete set of automated, intelligent production testing devices that include bidirectional power conversion circuits, pin beds, and control systems that is used for the formation and capacity-grading of series-connected lithium batteries.

The series-connected capacity-grading device and the series-connected formation device in this system constitute a complete set of independent testing devices, including a power supply section, a pin bed section, and battery series control, among others. The specific series power topology diagram is shown in FIG. 2. The power supply section primarily consists of bidirectional DC-DC modules, which are used to perform formation or capacity-grading on lithium batteries (loaded on trays).

Furthermore, FIG. 3 is a schematic diagram illustrating the battery charge-to-discharge energy path for a DC bus-based series-connected formation and capacity-grading production testing system according to the present invention and for a conventional series-connected formation and capacity-grading production testing system. The left side shows the schematic diagram of the battery discharge-to-charge energy path for the conventional series-connected formation production testing system, while the right side shows the schematic diagram of the battery discharge-to-charge energy path for the DC bus-based series formation and capacity sorting production testing system according to the present invention.

Here, the PCS device is a bidirectional power conversion unit that performs AC-DC conversion and connects the three-phase AC grid to the common DC bus. The PCS device generally consists of a power-frequency isolation transformer, a bidirectional AC-DC converter, AC-DC switches, and control and indication components. It automatically operates in the rectification or inversion state based on the power conditions on the common DC bus, and controls power factor, voltage harmonics, and current harmonics to ensure the energy quality of the three-phase AC grid.

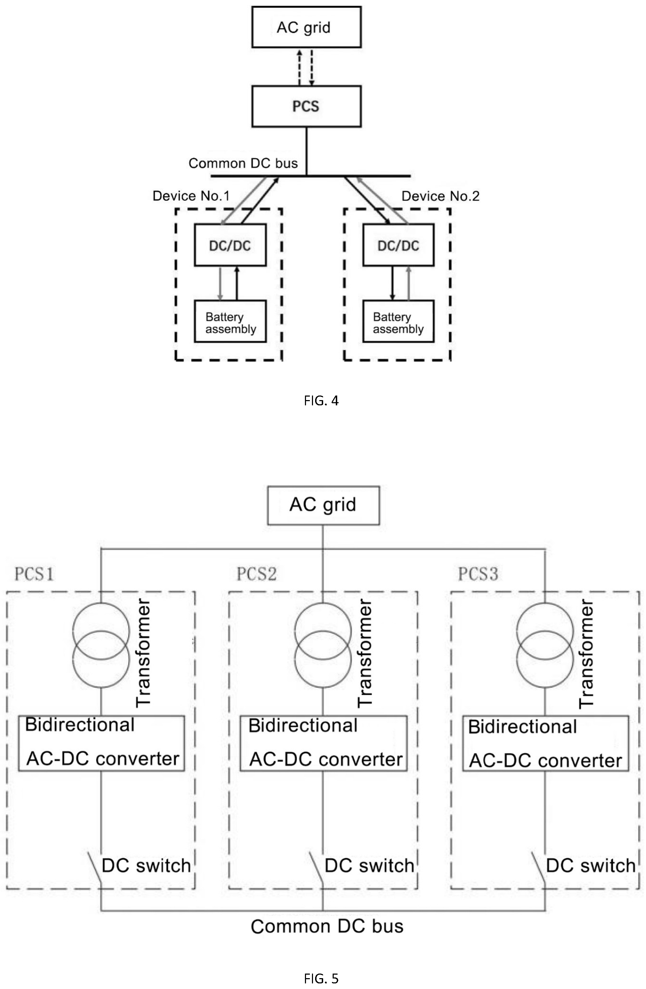

In the series-connected formation and capacity-grading production testing system according to the present invention, the output of the PCS is the common DC bus. The principle of electrical energy change in this system is shown in FIG. 4.

In one embodiment, the PCS device is a bidirectional power conversion unit comprising a single PCS unit or multiple PCS units operating in parallel. Here, the PCS unit includes a three-phase power-frequency transformer, a bidirectional AC-DC converter, a DC switch, and control and indication components. As shown in FIG. 5, a primary side of the three-phase power-frequency transformer is connected to the AC grid, and a secondary side thereof is connected to the bidirectional AC-DC converter, serving to isolate and step up or down the voltage. The primary side voltage range is 200 V to 35,000 V (typically 380 V / 10 kV), and the secondary side voltage range is 200 V to 1,000 V (typically 380 V). The bidirectional AC-DC converter is of non-isolated type and is connected to the DC switch, which in turn is connected to a common DC bus.

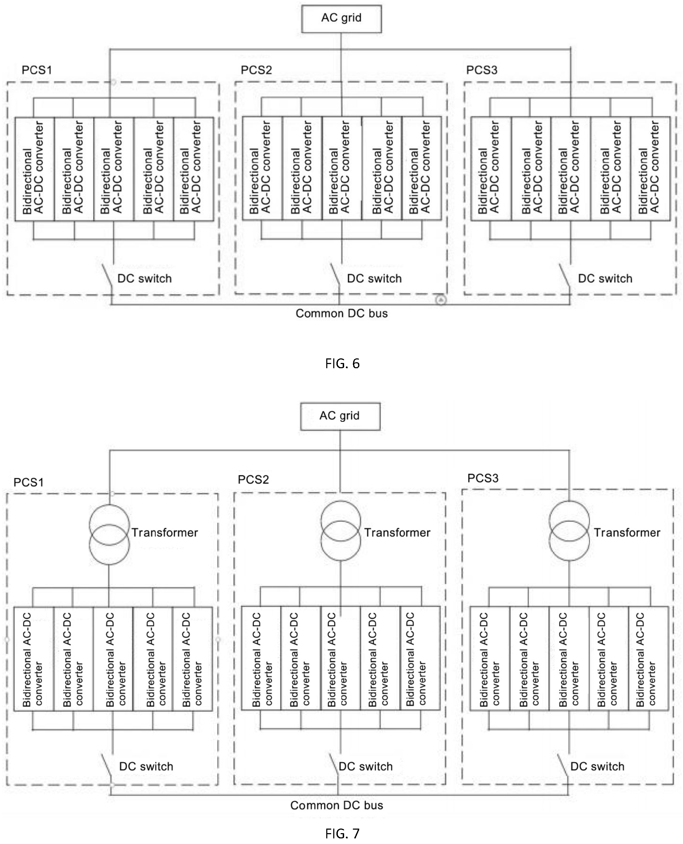

In another embodiment, the PCS device is a bidirectional power conversion unit comprising a single PCS unit or multiple PCS units operating in parallel. The PCS unit comprises one or more bidirectional AC-DC converter modules, a DC switch, and control and indication components. As shown in FIG. 6, the bidirectional AC-DC converter module is of high-frequency isolated type with multiple parallel outputs; the parallel input terminals of the bidirectional AC-DC converter module are connected to the AC grid, and the parallel output terminals thereof are connected to the DC switch, which is connected to a common DC bus.

In another embodiment, the PCS device is a bidirectional power conversion unit comprising a single PCS unit or multiple PCS units operating in parallel. The PCS unit comprises a power-frequency transformer, multiple bidirectional AC-DC converter modules, a DC switch, and control and indication components. As shown in FIG. 7, the multiple bidirectional AC-DC converter modules operate in parallel; a primary side of the power-frequency transformer is connected to the AC grid, while a secondary side thereof is connected to the parallel input terminals of the bidirectional AC-DC converter module, serving to isolate and step up or down the voltage. The primary side voltage range is 200 V to 35,000 V (typically 380 V / 10 kV), and the secondary side voltage range is 200 V to 1,000 V (typically 380 V). The bidirectional AC-DC converter module is of high-frequency isolated type, and parallel output terminals thereof are connected to the DC switch, which in turn is connected to a common DC bus.

In practical applications, the PCS device is a bidirectional power conversion unit, comprising a power-frequency isolation transformer, a bidirectional AC-DC converter module, AC-DC switches, and control and indication components. The power-frequency isolation transformer connects the three-phase AC grid to the bidirectional AC-DC converter module, serving to isolate and step up or down the voltage. The bidirectional AC-DC converter module can be connected in parallel to achieve a high-power PCS system. The bidirectional AC-DC converter module can be of either non-isolated or isolated type. The non-isolated bidirectional AC-DC converter module must be equipped with the power-frequency isolation transformer. The isolated bidirectional AC-DC converter module is only configured with the power-frequency isolation transformer when voltage step-up or step-down is required. In one embodiment, the capacity-grading master control cabinet comprises a DC switch, a switch monitoring module, and a switch status display unit. The DC switch is used to control the connection between a common DC bus and a capacity-grading DC bus. The capacity-grading master control cabinet uses the DC switch to control the connection between a capacity-grading section DC bus and the common DC bus. The capacity-grading master control cabinet serves to control and indicate the power supply to the capacity-grading section DC bus and to the series-connected capacity-grading device.

The formation master control cabinet includes a DC switch, a switch monitoring module, and a switch status display unit. The DC switch is used to control the connection between a common DC bus and a formation DC bus. The formation master control cabinet uses the DC switch to control the connection between the formation section DC bus and the common DC bus. The formation master control cabinet serves to control and indicate the power supply to the formation section DC bus and the series-connected formation device.

The formation master control cabinet or the capacity-grading master control cabinet primarily handles the connection and control between the PCS and all series-connected formation devices on a formation line or all capacity-grading devices on a capacity-grading line. It mainly includes a DC switch, a switch monitoring module, and a switch status display unit.

When the DC switch is turned off, all series-connected formation devices on the formation line or all capacity-grading devices on the capacity-grading line is disconnected from the PCS; when the DC switch is turned on, all series-connected formation devices on the formation line or all capacity-grading devices on the capacity-grading line is connected to the PCS, and the common DC bus is directly connected to the formation line DC bus or the capacity-grading line DC bus.

In one embodiment, when the DC switch in either the formation master control cabinet or the capacity-grading master control cabinet is turned on, the common DC bus is connected to the formation section DC bus or the capacity-grading section DC bus, and the series-connected formation device or the series-connected capacity-grading device operates.

When the DC switches in both the formation master control cabinet and the capacity-grading master control cabinet are turned on, the common DC bus is connected to the capacity-grading section DC bus and to the formation section DC bus, and the series-connected formation device and the series-connected capacity-grading device operate.

In one embodiment, the bidirectional power conversion circuit of the series-connected capacity-grading device is connected to the capacity-grading section DC bus and to the series-controlled battery section and performs a capacity-grading process on series-connected batteries, which includes multiple charging and discharging cycles. The bidirectional power conversion circuit in the series-connected formation device is connected to the formation section DC bus and the series-connected battery section, and performs a formation process on the series-connected batteries, which includes multiple charging cycles.

The bidirectional power conversion circuit (including a bidirectional DC-DC module) in the series-connected capacity-grading device connects the capacity-grading line DC bus to the capacity-grading master control cabinet. The bidirectional power conversion circuit (including a bidirectional DC-DC module) in the series-connected formation device connects the formation line DC bus to the formation master control cabinet. The bidirectional power conversion circuit (including a bidirectional DC-DC module) connects to the series circuit of formation or capacity-grading batteries.

The series-connected formation device and the series-connected capacity-grading device primarily consist of a power supply section and a pin-bed section. This system primarily demonstrates energy conversion. The energy conversion section of the series-connected formation device and of the series capacity-grading device mainly include a bidirectional power conversion circuit (containing a bidirectional DC-DC module), a series control circuit, and a battery assembly; the bidirectional DC-DC module is used to connect the DC bus and the series-controlled battery assembly.

The bidirectional power conversion circuit (including a bidirectional DC-DC module) in the series-connected capacity-grading device connects the capacity-grading line DC bus, the capacity-grading master control cabinet, and the series-controlled battery assembly. The bidirectional power conversion circuit (including a bidirectional DC-DC module) in the series-connected formation device connects the formation line DC bus, the formation master control cabinet, and the series-controlled battery assembly.

In one embodiment, a series battery includes N cells undergoing formation and capacity-grading. The N cells are connected in series via internal control within the formation and capacity-grading devices. N is an integer greater than or equal to 8 and less than or equal to 256 ([8, 256]). The cells in the series battery refer to those that require charging and discharging during the formation and capacity-grading processes.

In one embodiment, when the series-connected capacity-grading device and the series-connected formation device in the formation and capacity-grading production lines are performing capacity-grading and formation respectively, the devices undergo charging and discharging. The discharging device feeds energy back to the common DC bus, i.e., energy fed back to the DC bus. The charging device obtains energy from the common DC bus, i.e., energy consumed by the DC bus. The electrical energy flowing through the PCS device in the system is the difference in energy between the energy fed back to the DC bus and the energy consumed by the DC bus. The PCS operating state is automatically adjusted based on this difference in energy. The PCS operating state includes a rectification state, an inversion state, an idle state, and a no-load state.

In one embodiment, when the energy consumed by the common DC bus exceeds the energy fed back, the difference in energy is drawn from the AC grid via the PCS device through the common DC bus, and the PCS operating state is the rectification state. When the energy consumed by the common DC bus is less than the energy fed back, the difference in energy is fed back to the AC grid via the PCS device through the common DC bus, and the PCS operating state is the inversion state. When the energy consumed by the common DC bus equals the energy fed back, no energy flows between the common DC bus and the PCS device, and the PCS operating state is the idle state. When none of the series-connected formation devices or the series-connected capacity-grading devices on the common DC bus are performing charging or discharging operations, or when the DC switches in both the formation master control cabinet and the capacity-grading master control cabinet are turned off, the PCS operating state is the no-load state.

When the total energy demand (energy consumed) by the charging device on the common DC bus exceeds the total energy fed back to the common DC bus by the discharging device (energy fed back), or when all devices are in the charging state, the difference in energy is drawn from the AC grid via the PCS device through the common DC bus, and the PCS operating state is the rectification state. When the total energy demand (energy consumed) by the charging device on the common DC bus is less than the total energy fed back to the common DC bus by the discharging device (energy fed back), the difference in energy is fed back to the AC grid via the common DC bus through the PCS device, and the PCS operating is the inversion state. When the total energy consumed by the charging device on the common DC bus (energy consumed) equals the total energy fed back to the common DC bus by the discharging device (energy fed back), the system reaches a balanced state of charging and discharging, and no energy flows between the common DC bus and the PCS, at this point, the PCS is effectively in the idle state. When all formation devices or capacity-grading devices are in a dormant state or not charging or discharging, or when the DC switches of the formation master control cabinet and the capacity-grading master control cabinet are both turned off, that is, when all series-connected formation devices and series-connected capacity-grading devices on the common DC bus are not performing charging or discharging operations, the PCS operating state is the no-load state.

Compared to the prior art, the energy-saving principle of the series-connected formation and capacity-grading production testing system according to the present invention is as follows:
I. The PCS operating state is a rectification state (including a first rectification state and a second rectification state)
   1. When the total energy consumed by all devices on the system's common DC bus during the battery charging (Pcharge) exceeds the total energy fed back to the DC bus by all devices during the battery discharging (Pdischarge), i.e., Pcharge > Pdischarge, the difference in energy (Ppcs) between P_charge and P_discharge flows through the PCS. This difference in energy is drawn from the AC grid via the common DC bus through the PCS, and the PCS operates in the first rectification state.

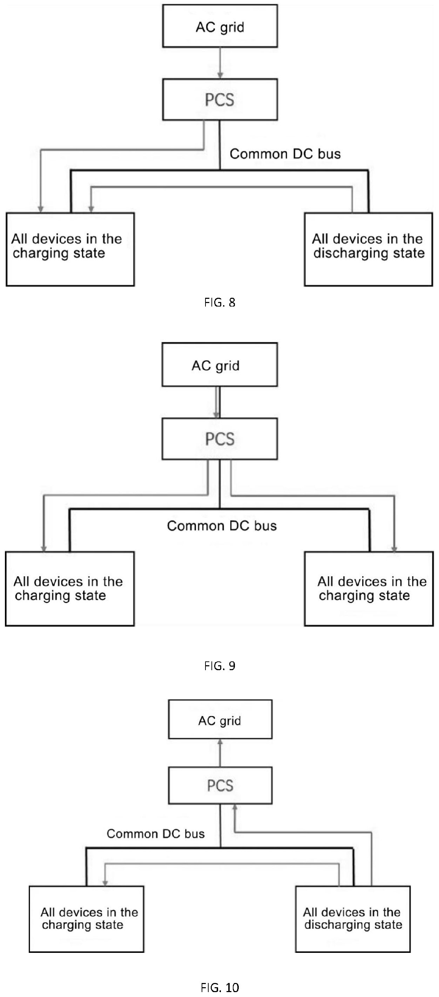

The energy exchange in the first rectification state is shown in FIG. 8. At this time, Pcharge = Pdischarge + Ppcs (where Ppcs is the energy drawn by the PCS from the AC grid). The energy fed back from the batteries in the system is routed via the common DC bus to the charging batteries in the system, rather than being fed back to the plant AC grid via the PCS for reuse. This feedback mechanism reduces the number of power conversion stages by two compared to conventional series-connected devices, resulting in an energy consumption reduction of over 10%.

At the same time, only a portion of the energy passes through the PCS. The total power supplied by the AC grid is more concentrated than that of a standalone AC-DC unit, resulting in better operating conditions, higher efficiency, and improved grid quality. The 10% reduction in energy consumption is an estimate, primarily resulting from the elimination of two AC-DC conversion steps in the battery energy feedback path (calculated using the example of a conventional battery formation and capacity-grading device with 95% AC-DC efficiency): 0.95 × 0.95 = 0.9025, meaning that energy consumption during the battery discharge-to-charge process in the system is reduced by over 10%.

The electricity drawn from the grid by this system via the PCS primarily consists of system losses and the energy required for battery charging. Losses mainly include cable losses, power circuit losses in the formation and capacity-grading devices, losses in the fan power supply, and device power supply losses.

2. When all devices in the system are charging, the PCS operating state is the second rectification mode.

The energy exchange in the second rectification state is shown in FIG. 9. At this time, Ppcs = Pcharge 1 + Pcharge 2. At this point, the total power of the PCS is relatively high, and all energy is supplied by the AC grid via the PCS. This facilitates the PCS operating at a higher power level, resulting in high overall efficiency and high grid quality.

### II. PCS operates state is the inversion state

When the total energy consumed by all devices on the system's common DC bus during the battery charging (Pcharge) is less than the total energy fed back to the DC bus by all devices during the battery discharge (Pdischarge), the difference in energy is fed back to the AC grid via the common DC bus through the PCS, and the PCS operates in the inversion state.

The energy conversion in the inversion state is shown in FIG. 10, where Pcharge + Ppcs = Pdischarge. A portion of the energy fed back by the battery in the system (Pcharge) is routed through the common DC bus to the charging battery within the system and is no longer fed back to the plant AC grid via the PCS. Compared to conventional series-connected devices, this configuration reduces the number of AC-DC conversions by two, resulting in a reduction of over 10% in energy consumption during the charge-discharge cycle. Ppcs represents excess electrical energy from production line devices. This energy is fed back to the AC grid via the common DC bus through the PCS, resulting in higher overall efficiency for the production line compared to conventional solutions.

### III. PCS operating state is the idle state

When the total energy from the charging device on the common DC bus equals the total energy fed back to the common DC bus by the discharging device, the system reaches a state of balance between charging and discharging. No energy flows between the common DC bus and the PCS; at this point, the PCS operating state is the idle state.

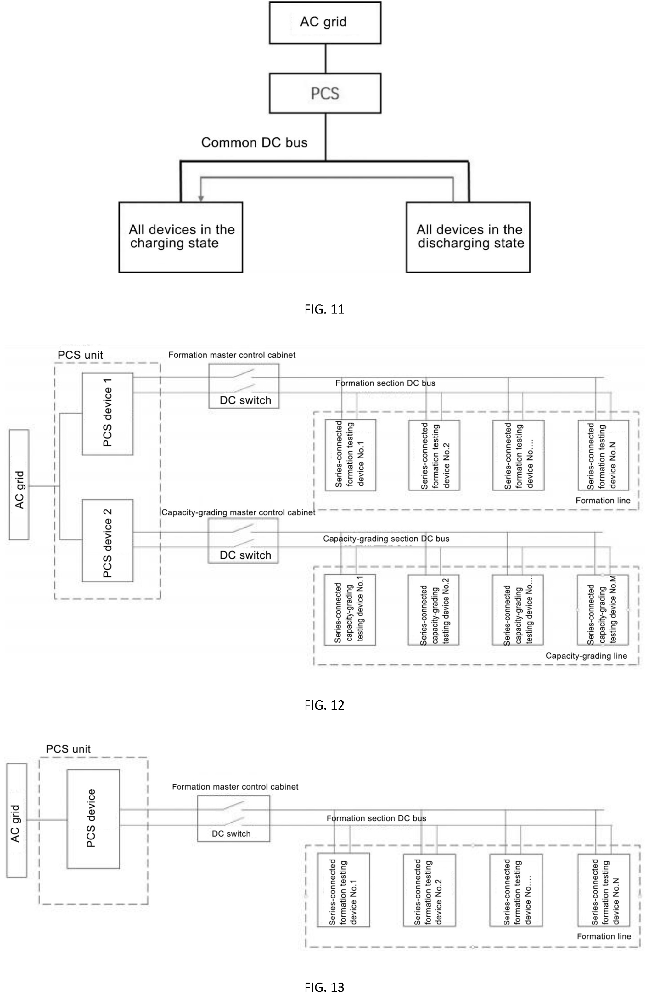

The specific energy conversion during the balanced state is shown in FIG. 11, where Pcharge = Pdischarge, and Ppcs = 0. The discharge and charging energy on the common DC bus are balanced. During battery charging and discharging cycles, this configuration reduces the number of energy conversion steps by two compared to conventional series-connected devices, lowering energy consumption by more than 10% and improving system efficiency.

In the embodiments of the present invention, all series-connected formation devices and all series-connected capacity-grading devices draw energy from the common DC bus. The series-connected formation device and the series-connected capacity-grading device operate according to the defined formation or capacity-grading processes. Generally, the series-connected formation device operates in charging mode, while the series-connected capacity-grading device has two operating modes: charging and discharging.

For example, a typical formation process generally includes: a 3-minute pause, charge 1, 3-minute pause, charge 2, 3-minute pause, charge 3, and so on. The defined operating currents for charge 1, charge 2, charge 3, and so on differ, and the duration of each phase also varies. A typical capacity-grading process is as follows: 5-minute pause, charge 1, 5-minute pause, discharge 2, 5-minute pause, charge 3, 5-minute pause and so on. On an automated production line, all devices perform charging and discharging operations at specific time intervals (primarily based on logistics times such as battery entry and exit). This results in time lags, with different devices operating at different charging and discharging currents simultaneously. That is, some devices are charging (at varying power levels), some are discharging (with variations between devices), and some are in standby or has stopped operating. The charging device draws energy from the common DC bus, while the discharging device feeds the battery's electrical energy back to the common DC bus. The PCS automatically operates in the rectification or inversion mode based on the difference in energy on the common bus: during the rectification, it draws the difference in energy from the AC grid; during the inversion, it feeds the difference in energy from the common DC bus back to the AC grid. The system's specific energy modes correspond to the four scenarios described above.

The three operating states of the PCS depend on the combined operating conditions of all devices on the production line. Each of the devices operates according to the defined formation and capacity-grading processes.

In practical applications, there may be cases where only the capacity-grading or formation device has independent common DC bus, as shown in FIG. 12. In this scenario, the capacity-grading device operates in both charging and discharging modes, and the overall operating mode is similar to that of a common DC bus for formation and capacity-grading. Since the formation device's common DC bus typically operates only in charging mode for all processes, the primary advantage of the PCS is that it operates under optimal conditions in most cases, achieving high charging and discharging efficiency and avoiding the disadvantage of excessively low system efficiency during low-current operation of individual devices.

When used exclusively for the formation section, where all devices are series-connected formation testing devices, a common bus bar system for the formation section is formed. Furthermore, when multiple devices share a single PCS, a small common bus system can be configured as shown in FIG. 13.

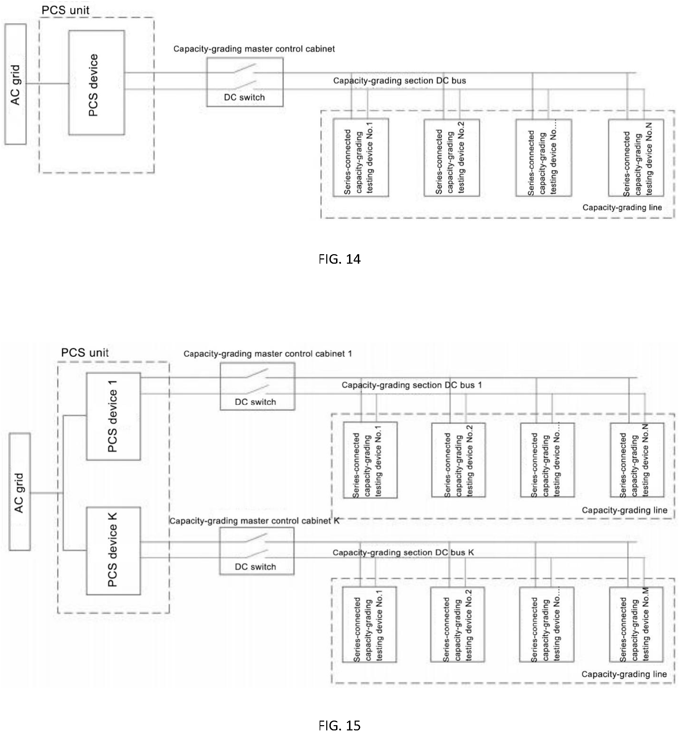

When used exclusively in the capacity-grading section, where all devices are series-connected capacity-grading testing devices, they form a common-bus system for the capacity-grading section. Furthermore, multiple devices sharing a single PCS can also form a small common bus system, as shown in FIG. 14.

When used exclusively in the capacity-grading section, where all devices are series-connected capacity-grading testing devices, another type of common bus system for the capacity-grading section can be formed. Furthermore, multiple devices can utilize two PCS devices, as shown in FIG. 15.

This invention separates the bidirectional AC-DC functionality and modules from the conventional series-connected formation and capacity-grading devices. The entire production line shares a single PCS, and each of independent series-connected formation and capacitysorting devices is connected to the PCS via a common DC bus (voltage approximately 200-1500 V, configurable). Consequently, the system's charging and discharging efficiency builds upon the high efficiency of the original series-connected formation and capacity-grading devices, reduces battery cycle charging and discharging losses, and enhances the overall efficiency of the production line. At the same time, the PCS operates at an optimal power level, achieving high charging and discharging efficiency and high-power quality.

The above are merely preferred embodiments of the present invention and do not constitute any limitation on the scope of the invention. Any modifications, equivalent changes, or modifications to the above embodiments that do not depart from the technical content of the present invention and are based on the technical essence of the present invention are still within the scope of the present invention.

## Claims

1. A DC bus-based series-connected formation and capacity- grading production testing system, **characterized in that** it comprises: an AC grid, a PCS device, a common DC bus, a capacity-grading section DC bus, a formation section DC bus, a formation master control cabinet, a capacity-grading master control cabinet, a series-connected capacity-grading device on a capacity-grading line, and a series-connected formation device on a formation line, wherein the PCS device is connected to the AC grid and to the common DC bus respectively, the common DC bus is connected to the formation master control cabinet and to the capacity-grading master control cabinet respectively, the series-connected capacity-grading device on the capacity-grading line is connected to the capacity-grading master control cabinet and to the capacity-grading section DC bus respectively, and the series-connected formation device on the formation line is connected to the formation master control cabinet and to the formation section DC bus respectively, wherein,
the PCS device is a bidirectional power conversion unit used to rectify three-phase AC power into DC or to invert DC power into three-phase AC power;
the formation master control cabinet is used to control the connection between the formation section DC bus and the common DC bus;
the capacity-grading master control cabinet is used to control the connection between the capacity-grading section DC bus and the common DC bus, the series-connected capacity-grading device on the capacity-grading line is a device used for lithium battery capacity-grading on a production line, and the series-connected formation device on the formation line is a device used for lithium battery formation on the production line;
both the series-connected capacity-grading device and the series-connected formation device are a complete set of automated, intelligent production testing devices comprising bidirectional power conversion circuits, pin beds, and control systems that is used for the formation and capacity-grading of series-connected lithium batteries;
wherein the PCS device is a bidirectional power conversion unit, comprising a single PCS unit or multiple PCS units operating in parallel, wherein the PCS unit comprises a three-phase power-frequency transformer, a bidirectional AC-DC converter, a DC switch, and control and indication components;
a primary side of the three-phase power-frequency transformer is connected to the AC grid, and a secondary side thereof is connected to the bidirectional AC-DC converter, serving to isolate and step up or down the voltage, the primary side voltage range is 200 V to 35,000 V, and a secondary side voltage range is 200 V to 1,000 V, the bidirectional AC-DC converter is of non-isolated type, the bidirectional AC-DC converter is connected to the DC switch, which in turn is connected to the common DC bus.

2. The DC bus-based series-connected formation and capacity-grading production testing system according to claim 1, **characterized in that**:
the capacity-grading master control cabinet comprises a DC switch, a switch monitoring module, and a switch status display unit, wherein the DC switch is used to control the connection between the common DC bus and the capacity-grading DC bus, the capacity-grading master control cabinet controls the connection between the capacity-grading DC bus and the common DC bus via the DC switch, and is used for power supply control and indication of the capacity-grading DC bus and the series-connected capacity-grading device;
the formation master control cabinet comprises a DC switch, a switch monitoring module, and a switch status display unit, wherein the DC switch is used to control the connection between the common DC bus and the formation DC bus, the formation master control cabinet controls the connection between the formation section DC bus and the common DC bus via the DC switch , and is used for power supply control and indication of the formation section DC bus and the series-connected formation device.

3. The DC bus-based series-connected formation and capacity-grading production testing system according to claim 2, **characterized in that**:
when the DC switch in either the formation master control cabinet or the capacity-grading master control cabinet is turned on, the common DC bus is connected to either the formation section DC bus or the capacity-grading section DC bus, and the series-connected formation device or the series-connected capacity-grading device operates; and
when the DC switches in both the formation master control cabinet and the capacity-grading master control cabinet are turned on, the common DC bus is connected to both the capacity-grading section DC bus and the formation section DC bus, and the series-connected formation device and the series-connected capacity-grading device operate.

4. The DC bus-based series-connected formation and capacity-grading production testing system according to claim 1, **characterized in that**:
the bidirectional power conversion circuit in the series-connected capacity-grading device is connected to the capacity-grading section DC bus and to a series-controlled battery section, and performs a capacity-grading process on series-connected batteries, which comprises multiple charging and discharging cycles, and the bidirectional power conversion circuit in the series-connected formation device is connected to the formation section DC bus and to a series-controlled battery section, and performs a formation process on series-connected batteries, which comprises multiple charging cycles.

5. The DC bus-based series-connected formation and capacity-grading production testing system according to claim 4, **characterized in that**:
the series-connected batteries comprise N cells undergoing formation and capacity-grading, wherein the N cells are series-connected via internal control within the formation and capacity-grading device to form a series circuit, and N is an integer greater than or equal to 8 and less than or equal to 256;
the batteries in the series batteries refer to those that require charging and discharging during the formation and capacity-grading processes.

6. The DC bus-based series-connected formation and capacity-grading production testing system according to claim 1, **characterized in that**:
when the series-connected capacity-grading device and the series-connected formation device in the formation and capacity-grading production line are performing capacity-grading and formation respectively, the devices perform charging and discharging operations, wherein, the device performing the discharging operation feeds energy back to the common DC bus, i.e., energy fed back to the DC bus, while the device performing the charging operation obtains energy from the common DC bus, i.e., energy consumed by the DC bus; the electrical energy flowing through the PCS device in the system is the difference in energy between the energy fed back to the DC bus and the energy consumed by the DC bus, and the PCS operating state is automatically adjusted based on said difference in energy, wherein the PCS operating state includes a rectification state, a inversion state, an idle state, and a no-load state.

7. The DC bus-based series-connected formation and capacity-grading production testing system according to claim 6, **characterized in that**:
when the energy consumed by the common DC bus exceeds energy fed back thereto, a difference in energy is drawn from the AC grid via the common DC bus through the PCS device, and the PCS operating state is the rectification state,
when the energy consumed by the common DC bus is less than the energy fed back thereto, the difference in energy is fed back to the AC grid via the common DC bus through the PCS device, and the PCS operating state is the inversion state,
when the energy consumed by the common DC bus equals the energy fed back thereto, no energy flows between the common DC bus and the PCS device, and the PCS operating state is the idle state, and
when none of the series-connected formation device or the series-connected capacity-grading device on the common DC bus is charging or discharging, the PCS operating state is the no-load state.
